(19) Europäisches Patentamt
European Patent Office
Office européen des brevets

(11) **EP 1 159 173 B1**

(12) # EUROPÄISCHE PATENTSCHRIFT

(45) Veröffentlichungstag und Bekanntmachung des Hinweises auf die Patenterteilung:
**22.02.2006 Patentblatt 2006/08**

(21) Anmeldenummer: **00907597.9**

(22) Anmeldetag: **22.02.2000**

(51) Int Cl.:
***B60T 8/00*** *(2006.01)* ***B60C 23/06*** *(2006.01)*
***G01M 17/02*** *(2006.01)*

(86) Internationale Anmeldenummer:
**PCT/EP2000/001445**

(87) Internationale Veröffentlichungsnummer:
**WO 2000/051861 (08.09.2000 Gazette 2000/36)**

(54) **VERFAHREN ZUR REGELUNG DES FAHRVERHALTENS EINES FAHRZEUGS**
METHOD OF CONTROLLING THE PERFORMANCE OF A MOTOR VEHICLE
PROCEDE DE REGULATION DU COMPORTEMENT ROUTIER D'UN VEHICULE

(84) Benannte Vertragsstaaten:
**DE FR**

(30) Priorität: **27.02.1999 DE 19908546**
**15.09.1999 DE 19944091**
**11.02.2000 DE 10006012**

(43) Veröffentlichungstag der Anmeldung:
**05.12.2001 Patentblatt 2001/49**

(73) Patentinhaber: **Continental Teves AG & Co. oHG**
**60488 Frankfurt (DE)**

(72) Erfinder:
- **FENNEL, Helmut**
  **D-65812 Bad Soden (DE)**
- **BATISTIC, Ivica**
  **D-60385 Frankfurt am Main (DE)**

(56) Entgegenhaltungen:
**EP-A- 0 322 911**
**EP-A- 0 345 753**
**WO-A-90/05646**
**WO-A-97/44673**
**DE-C- 4 418 773**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).



Printed by Jouve, 75001 PARIS (FR)

**Beschreibung**

Die Erfindung betrifft ein Verfahren zur Regelung des Fahrverhaltens eines Fahrzeugs, bei dem auf Räder und Reifen wirkende Kräfte mit Radkraft-oder Reifensensoren ermittelt und als Regelgröße(n) für ein Kraftfahrzeug-Regelungssystem, wie ABS, ASR, EMB etc. eingesetzt werden und bei dem die Regelgrößen zur Bemessung und/oder Modulation des Bremsdruckes in den Radbremsen der Räder und/oder des Antriebsmoments herangezogen werden.

Es sind eine Vielzahl derartiger Verfahren zur Regelung des Fahrverhaltens eines Fahrzeugs bekannt, die Reifensensoren zur Erfassung der an den Reifen angreifenden Kräfte und Momente verwenden. Während in der EP 04 441 09 B1 die Deformation des Reifenprofilbereichs des Reifens - der Reifenlatsch - überwacht wird, wird in der WO 96/10505 die Deformation der Seitenwand - die Torsionsdeformationen - eines Reifens über eine Zeitspannenmessung zwischen dem Passieren mindestens zweier auf unterschiedlichem Radius zur Rotationsachse angeordneter Marken am rotierenden Rad erfaßt. Ein Reifensensor, der bei einer Verformung des Reifens infolge der an dem Reifen angreifenden Kräfte eine Änderung der Phasenlage zwischen von Meßelementen abgegebenen Meßsignalen erfaßt, und diese Änderung der Phasenlage als Maß für die von dem Rad auf die Fahrbahn übertragenen Momente und/oder für den momentanen Reibwert auswertet, ist in der WO 97/44673 beschrieben. Die so am Reifen angreifenden und mit dem Reifensensor erfaßten Kräfte werden in Kraftfahrzeug-Regelungssystemen zur Bemessung und/ oder Modulation des Bremsdruckes in den Radbremsen der Räder herangezogen.

Neben diesen Kraftfahrzeug-Regelungssystemen, die auf der Basis von mit Reifensensoren erfaßten Kräften und/oder Momenten zwischen dem Reifen und der Fahrbahn die Bemessung und/oder Modulation des Bremsdruckes in den Radbremsen der Räder regeln, sind ABS- und/oder ASR-Regelungssysteme für Kraftfahrzeuge bekannt, die mit konventionellen Sensorvorrichtungen zur Erfassung der vier Raddrehzahlen bzw. Radgeschwindigkeiten eines Kraftfahrzeugs ausgestattet sind. Überschreitet ein Rad während einer Bremsung oder beim Beschleunigen den optimalen Schlupfbereich, so daß ein Blockieren oder Durchdrehen der Räder droht, greift automatisch die ABS- oder ASR-Regelung ein.

Bei diesen bekannten ABS- oder ASR-Regelungssystemen werden die für die Regelung benötigten Informationen durch Ermittlung des Drehverhaltens der einzelnen Räder gewonnen, wobei durch logische Verknüpfung der Raddrehsignale eine die Fahrzeuggeschwindigkeit näherungsweise wiedergebende Fahrzeug-Referenzgeschwindigkeit ermittelt wird, die dann als Bezugsgröße zur Bestimmung des Radschlupfes und anderer Regelgrößen und schließlich zur Bemessung - bzw. Regelung des Bremsdruckes in den Radbremsen der Räder herangezogen werden kann. Die Bestimmung des Radschlupfes bis zu einem Schlupfgrenzwert, dem kritischen Schlupf, bis zu dem die übertragbare Bremskraft oder das Antriebsmoment nur zunimmt, wird bei den bekannten ABS- oder ASR-Regelungssystemen dadurch erzielt, daß das Fahrzeug über diesen kritischen Schlupf hinaus gebremst bzw. angetrieben wird, woraufhin sich die Radumfangsgeschwindigkeit gegenüber der Fahrzeug-Referenzgeschwindigkeit derart verändert, daß die Neigung der Räder zum Blockieren oder Durchdrehen erkannt wird. Die Regelzyklen, die aus den in beliebiger Reihenfolge auftretenden Phasen Druck halten, Druck aufbauen, Druck abbauen, bestehen, können bei einer ABS- oder ASR-Regelung mehrmals pro Rad durchlaufen werden.

Dadurch daß zur Erkennung des Schlupfgrenzwertes der kritische Schlupf überschritten werden muß, verringert sich die Bremsleistung oder Antriebsleistung in jedem ABS oder ASR-Regelzyklus. Gleichzeitig verlängert sich der Bremsweg. Mit dem Überschreiten des kritischen Schlupfes werden die Seitenkräfte am Reifen abgebaut. Die Fahrzeugstabilität und Lenkbarkeit des Fahrzeugs wird reduziert.

Es wäre daher ein Verfahren zur Regelung des Fahrverhaltens eines Fahrzeugs wünschenswert, bei dem über Sensoren der Schlupfgrenzwert oder ein zur ABS- oder ASR-Regelung geeigneter Schlupfwert an den Rädern eines Fahrzeugs erfasst bzw. bestimmt werden könnte, ohne dass der Schlupfgrenzwert oder kritische Schlupf zur Erfassung oder Bestimmung überschritten werden müßte.

Reifensensoren, die die von dem Rad auf die Fahrbahn übertragenen und an dem Reifen angreifenden Kräfte ermitteln, können zwar grundsätzlich als Regelgrößen in einem ABS- oder ASR-Regelungssystem eingesetzt werden, da sie die Kräfte unmittelbar an der Stelle erfassen, an der sie entstehen. Da es jedoch $\mu$-Schlupfkurven gibt, bei denen der Reibwert ($\mu$) schlupfproportional steigt und damit die Kraft zwischen Reifen und Fahrbahn bei blockierenden Rädern steigt, lassen sich über die mit den Reifensensoren erfaßten Kräfte nicht die zur ABS- oder ASR-Regelung geeigneten Schlupfwerte eindeutig bestimmen.

Der Erfindung liegt die Aufgabe zugrunde, ein Verfahren zur Regelung des Fahrverhaltens eines Fahrzeugs zu schaffen, mit dem sich die Beeinflussung der Fahrzeugbewegung optimieren läßt.

Diese Aufgabe wird bei einem gattungsgemäßen Verfahren durch die Merkmale des Anspruchs 1 gelöst.

Die Besonderheit des Verfahrens besteht darin, daß der Arbeitspunkt und/oder Arbeitsbereich von mittels Radkraft-oder Reifensensoren ermittelten Kräften beim Einsetzen eines ABS- oder ASR-Regelungsvorganges mit Hilfe des ermittelten Radschlupfes eingestellt wird. Der Radschlupf wird in Abhängigkeit von mit konventionellen Sensoren gemessenen und/oder berechneten Größen, wie Raddrehzahlen und Fahrzeug-Referenzgeschwindigkeit und der Bewertung des dynamischen Raddrehverhaltens bestimmt. Dabei wird der Arbeitspunkt und/oder Arbeitsbereich der mit Radkraft- oder Reifensensoren erfaßten Regelgrößen durch die gleichzeitige Bestimmung der Kräfte beim kritischen Radschlupf und/oder mindestens einem Radschlupf und beim Radumkehrpunkt der Geschwindigkeit oder deren Ableitung im ersten ABS- oder ASR-Regelzyklus eingestellt. Die Bestimmung der maximalen Kraft erfolgt am Beginn der Brems- oder Antriebsschlupfzunahme oder der negativen (ABS) oder positiven (ASR) Beschleunigung d.h. im Bereich des kritische Schlupfwerts während des ersten ABS- oder ASR-Regelzyklusses. Ferner erfolgt eine Bestimmung der minimalen Kraft beim Auftreten einer positiven Beschleunigung aus dem Bremsschlupf oder einer negativen Beschleunigung aus dem Vortriebsschlupf bzw. Wiederbeschleunigung aus dem Schlupf der Räder. Über eine Abgleichung des bewerteten Drehverhaltens der einzelnen Räder und der Fahrzeug-Referenzgeschwindigkeit während des kritischen Schlupfes mit den mit den Radkraft- oder Reifensensoren ermittelten Kräften, insbesondere den Längskräften, wird der Arbeitspunkt und/oder Arbeitsbereich der Regelgröße Kraft" eingestellt. Die Erfindung beruht daher auf der Erkenntnis, daß der Arbeitspunkt und/oder Arbeitsbereich der mittels Radkraft- oder Reifensensoren ermittelten Kräfte am Beginn des ersten Regelzyklus erkannt wird, indem der Radschlupf, nämlich der kritische Schlupf, über das Drehzahlverhalten und die Fahrzeug-Referenzgeschwindigkeit ermittelt wird, um so den Kraftschluß zwischen Reifen und Fahrbahn eindeutig zu bestimmen, und Fehler der Regelgrößen auszuschließen, die auf μ-Schlupfkurven, bei denen der Reibwert (μ) schlupfproportional und damit die Kraft zwischen Reifen und Fahrbahn bei blockierenden oder durchdrehenden Rädern steigt, beruhen.

Mit dem erfindungsgemäßen Verfahren wird erreicht, daß der Arbeitspunkt und/oder Arbeitsbereich der am Fahrzeugreifen angreifenden Kräfte in dem ABS- oder ASR-Regelbereich des Radschlupfes eingestellt wird, wozu das Drehverhalten der Räder im instabilen Bereich erstmalig beim Einsetzen des Regelungsvorganges erfaßt und ggf. unter Einbeziehung weiterer Größen ausgewertet wird. Anschließend werden die folgenden ABS- oder ASR-Regelzyklen, nämlich die Regelung des Radschlupfs, über die mit Radkraft- oder Reifensensoren ermittelten Kräfte solange unterhalb des kritischen Schlupfes bzw bis zu dem kritischen Schlupf (Schlupfgrenzert) geregelt, wie keine äußeren Einwirkungen, wie z.B. Reibwertänderungen, den Arbeitspunkt und/oder Arbeitsbereich verschieben und der Schlupfgrenzwert überschritten wird.

Hier setzt nach einer besonders vorteilhaften Ausbildung des Verfahrens, die zuvor beschriebene Bestimmung des Arbeitspunktes und/oder Arbeitsbereiches neu ein, so daß der Arbeitspunkt und/oder Arbeitsbereich an die neuen Kenngrößen bzw. Zustandsgrößen angepaßt wird.

Eine Reihe von besonders vorteilhaften Ausführungsbeispielen des erfindungsgemäßen Verfahrens sind in den Unteransprüchen beschrieben.

In vorteilhafter weiterbildung werden auf Basis der mit den konventionellen Sensoren gemessenen Größen der kritische Radschlupf und/oder mindestens ein Radschlupf im ABS- oder ASR-Regelbereich bei gleichzeitiger Ermittlung der Kräfte mittels der Radkraft- oder Reifensensoren bestimmt, weil durch die Verwendung der konventionellen Regelungsverfahren beim Eintritt in die ABS- oder ASR-Regelung eine sichere Arbeitspunkt- oder Arbeitsbereichsbestimmung der Regelgröße(n) - Kraft - in einfacher Weise eingestellt werden kann.

Eine Ausführungsvariante sieht vor, daß eine Kraft bei einer Brems- oder Antriebsschlupfzunahme und/oder einer Beschleunigung der Räder und eine Kraft bei einem Radumkehrpunkt der Geschwindigkeit oder deren Ableitung, nämlich beim Auftreten einer Wiederbeschleunigung aus dem Bremsschlupf oder einer Verzögerung aus dem Vortriebsschlupf der Räder, in einem ersten ABS- oder ASR-Regelzyklus bestimmt werden, weil die Kräfte bei einer Brems- oder Antriebsschlupfzunahme oder einer Beschleunigung der Räder nicht nur vom Schlupf und/oder der Verzögerung, sondern auch von der Kraftzunahme abhängt, die von verschiedenen Kenngrößen beeinflußt werden, wie z.B. einem geringen Luftdruck der Reifen oder Reifen mit erhöhtem Schlupfbedarf.

Dadurch, daß die Kräfte vorzugsweise am Beginn der Brems-oder Antriebsschlupfzunahme und/oder Beschleunigung des ersten ABS- oder ASR-Regelzyklus bestimmt werden, können unmittelbar nach deren Bestimmung die mittels der Radkraft-oder Reifensensoren ermittelten Regelgrößen zur ABS- oder ASR-Regelung herangezogen werden, so daß die mittels der Sensoren ermittelten Regelgrößen innerhalb eines stabilen Radschlupfbereiches geregelt werden können. Dadurch kann der im instabilen Radschlupfbereich auftretende Seitenkraftabbau der Reifen und die damit verbundenen Beeinträchtigungen bei der Fahrzeuglenkung und die Reduzierung der Bremsleistung vermieden werden.

Nach einem weiteren Ausführungsbeispiel wird beim Eintritt in den Fahrstabilitätsbereich die Bemessung oder Modulation des Bremsdruckes oder des Antriebsmomentesnach der Beziehung

$$F = k_1 \times F_{max}$$

mit Fmax= Längskraft im kritischen Schlupfbereich

$k_1$= Proportionalitätsfaktor
F= Ist-Längskraft

geregelt. Um Schwingungsanregungen des Fahrwerks zu vermeiden, wird die Längskraft gestuft eingestellt. Nachdem die vorstehend beschriebene Bestimmung des ersten Arbeitspunktes erfolgt ist und der Radschlupf mit

der Regelgröße $F_{max}$ x $k_1$ abgebaut ist und der mit der Kraft korrespondierende Bremsdruck bzw. das Grundantriebsmoment eingestellt ist, erfolgt eine Beobachtung der Kraft und des Schlupfes bzw. der Beschleunigung am Rad. Wenn das Produkt $F_{max}$ x $k_1$ größer ist als die mit den Radkraft- oder Reifensensoren ermittelten Kräfte F, wird die ABS- oder ASR-Regelung vorzeitig nach der Beziehung

$$T_{ABS\ ASR} = \frac{T_0}{k_1 \cdot F_{max} - F}$$

beendet, wobei $T_0$ eine nominale Zeit von 60 - 90 ms, vorzugsweise 70 - 80 ms und $T_{ABS/ASR}$ die Austrittszeit ist.

Durch die Bildung des Produktes $F_{max}$ x $k_1$ und der Bewertung, nämlich wenn $F_{max}$ x $k_1$ größer ist als die mit den Radkraft- oder Reifensensoren ermittelten Kräfte F, ist auf einen zunehmenden Reibwert zwischen Reifen und Fahrbahn bei konstanter Bremsdruckeinsteuerung oder Antriebsmomentenvorgabe durch den Fahrer zu schließen. Der ABS- oder ASR-Modus wird in diesem Falle beschleunigt, mit der, der Differenz $k_1 \cdot F_{max} - F$ indirekt proportionalen Austrittszeit verlassen, weil auf ein Fahrzeugverhalten mit abnehmender Blockier- oder Antriebsschlupfneigung geschlossen werden kann.

Entspricht das bewertete Produkt $F_{max}$ x $k_1$ in etwa der mit den Radkraft- oder Reifensensoren gemessenen Kraft F, wird auf eine Bremsung oder Beschleunigung auf homogenem Reibwert geschlossen. Die Bewertung von $k_1 \cdot F_{max}$ ist dabei von der genauen Bestimmung der bei der Brems-oder Antriebsschlupfzunahme oder Beschleunigung der Räder ermittelten Kraft $F_{max}$ abhängig, und damit bei der ABS-Regelung die Bremsleistung und bei der ASR-Regelung die Leistung des Antriebs und die Beschleunigung.

Mittels Selbsttestzyklen werden die ermittelten Kräfte $F_{max}$ und $F_{min}$ stets aktualisiert und, wenn erforderlich, korrigiert. Hierzu wird nach einer nominalen Zeitspanne eine Modulation oder ein Aufbau des Bremsdrukkes durch einen in das Regelungssystem eingesteuerten Druckaufbauimpuls und/oder im ASR-Regelzyklus, einer Antriebsmomentenzugabe vorgenommen, wobei die positive oder negative Beschleunigung der Räder und die Kräfte ermittelt werden. Aus der Bewertung der Veränderung der gemessenen Kräfte und der Beschleunigung wird z.B., bei zunehmenden Kräften F und unveränderter Beschleunigung, wenn also die Kräfte F zunehmen ohne daß eine Beschleunigungszunahme ermittelt wird, auf eine ungenügende Brems-oder Antriebskraft geschlossen. Mit anderen Worten, die mit Reifensensoren gemessenen und ausgewerteten Kräfte F, insbesondere die zwischen Reifen und Fahrbahn erfassten Längskräfte, entsprechen nicht den von dem Rad oder den Rädern auf die Fahrbahn übertragbaren Kräfte. In diesem Fall wird eine Neufindung des Arbeitspunktes oder Arbeitsbereiches eingeleitet.

Nach einem Ausführungsbeispiel nach der Erfindung werden die Kraft $F_{max}$ und/oder die Beschleunigung durch Vergleich mit einem Schwellenwert (S) bewertet und beim Überschreiten eines Schwellenwertes durch die Modulation oder den Aufbau des Bremsdrukkes oder die Erhöhung des Antriebsmoments eine Instabilität und damit einen Bremsschlupf oder einen Antriebsschlupf ausgelöst, die eine Neueinstellung des Arbeitspunktes mit Hilfe des Radschlupfes bewirkt, wie es vorstehend beschrieben ist. Vorzugsweise wird diese Neueinstellung oder Neubestimmung des Arbeitspunktes über den Radschlupf bei hoher Fahrzeuggeschwindigkeit oder großen Kräften eingeleitet.

Nach einem weiteren Ausführungsbeispiel wird die maximale Kraft $F_{max}$ oder die Beschleunigung durch Vegleich bewertet und bei Unterschreiten eines Schwellenwertes (S), insbesondere bei Fmax oder bei a(Beschleunigung)< S, durch eine Modulation oder einen Aufbau des Bremsdruckes über das Einsteuern von mindestens einem Druckaufbauimpuls, in der Regel über das Einsteuern mehrerer Druckaufbauimpulse und/oder eine Antriebsmomentenzugabe, in das Regelungssystem, die gemessene Kraft F an die maximale Kraft ($F_{max}$) herangeführt. Dabei tritt das betrachtete Rad geringfügig in den Schlupf, d.h. der kritische Schlupf bzw. der Schlupfgrenzwert wird überschritten und ein neuer Arbeitspunkt eingestellt. Diese Regelung wird vorteilhaft bei geringer Kraft oder Fahrzeugbeschleunigung vorgesehen.

Eine weitere Ausbildung des Verfahrens sieht vor, daß bei nahezu konstanter oder nicht zunehmender Kraf F und Zunahme der positiven oder negativen Beschleunigung oder der gemessene Kraft nach der Beziehung $F > k_1 \cdot F_{max}$, das Rad oder die Räder im Bereich des ABS- oder ASR-Regelbereich des Radschlupfes sind. In diesem Falle wird eine Antriebsmoment- oder Bremdruckreduzierung mittels eines Bremsdruckabbauimpulses von ca. Tp= 2ms oder eine Antriebsmomentenzugabe eingesteuert, bis $F \leq k_2 * F_{min}$ .mit $k_2 > 1$ ist.

Ein Ausführungsbeispiel ist in der Zeichnung dargestellt und wird im folgenden näher beschrieben.

Es zeigen

Figur 1 eine schematische Darstellung der Einbindung der Kraftsensorik in die ABS/ASR-Funktion

Figur 2 eine schematische Darstellung der Initialisierung der ABS-Funktion oder der ASR-Funktion

Figur 3 ein Ablaufdiagramm der ABS-Funktion

Figur 4 ein Ablaufdiagramm der ASR-Funktion

Figur 5 die Änderung der Geschwindigkeit eines Rades während einer Blockierschutzregelung, den Bremsdruck im Rad und die Änderung der Kraft zwischen Reifen und Fahrbahn zur gleichen Zeit auf homogenen Untergrund

Figur 6 die Änderung der Geschwindigkeit eines Rades während einer Blockierschutzregelung, den Bremsdruck im Rad und die Änderung der Kraft zwischen Reifen und Fahrbahn zur gleichen Zeit bei abnehmendem Reibwert

Figur 7 die Änderung der Geschwindigkeit eines Rades während einer Blockierschutzregelung, den Bremsdruck im Rad und die Änderung der Kraft zwischen Reifen und Fahrbahn zur gleichen Zeit bei zunehmendem Reibwert

Der prinzipielle Aufbau der elektronischen Schaltung des ABS-oder ASR-Reglers 10 ist in Figur 1 dargestellt. Die mit herkömmlichen Radsensoren gewonnenen Signale V1 bis V4 werden zunächst in einem Schaltkreis 11 aufbereitet und verstärkt. Durch Vergleich der Ausgangssignale dieses Schaltkreises 11 unter Anwendung bestimmter Auswahlkriterien wird eine Referenzgeschwindigkeit vRef gebildet, wie sie in konventionellen Bremsanlagen als Bezugsgröße für die Bremsdruckregelung in den einzelnen Radbremsen bzw. Regelkanälen dient. Durch Signalverarbeitung werden weiterhin in bekannter weise aus den Radsignalen die Verzögerung und Beschleunigung der einzelnen Räder, die Änderung dieser Werte (der sogenannte Ruck), der Radschlupf usw. ermittelt. Parallel zu dem Schaltkreis 11 werden mit Radkraft- bzw.Reifensensoren gewonnene Radkraftsignale F1 bis F4 in einem Filter 12 aufbereitet und in einer Logikeinheit 13 nach bestimmten Kriterien das Kraftmaximum Fmax und das Kraftminimum Fmin ermittelt. Dabei werden unter Fmax und Fmin folgende Kräfte verstanden:

Im ABS-Regelzyklus ist Fmax die Kraft, bei der eine eindeutige Bremsschlupfzunahme oder Verzögerung ermittelt wird. Fmin ist die Kraft, bei der eine eindeutige Geschwindigkeitsumkehr bzw. Beschleunigungsumkehr (Wiederbeschleunigung aus dem Bremsschlupf)ermittelt wird.

Im ASR-Regelzyklus ist Fmax die Kraft, bei der eine eindeutige Antriebsschlupfzunahme oder Beschleunigung ermittelt wird. Fmin ist die Kraft bei der eine eindeutige Geschwindigkeitsumkehr (Verzögerung aus dem Vortriebsschlupf, Wiederbeschleunigung aus dem Schlupf) ermittelt wird.

Zur Bestimmung von Fmax und Fmin ist der Schaltkreis 11 mit der Logikeinheit 13 verbunden. Hier erfolgt durch Auswertung der im Schaltkreis 11 im ersten ABS- oder ASR-Regelzyklus ermittelten Informationen bezüglich des Radschlupfes, die mit den Radkraftsignalen F1 bis F4 in der Logikschaltung verknüpft werden, die Fmax- und Fmin-Bestimmung. Der mit den herkömmlichen Radsensoren bestimmte kritische Radschlupf und/oder ein Radschlupf im ABS-bzw. ASR- Regelbereich wird zur Einstellung des Arbeitspunktes und/oder Arbeitsbereiches der ermittelten Istkräfte F herangezogen.

An den Ausgang der Logikeinheit 30 ist eine Einheit 14 zur Bestimmung des sofortigen Kraftanteils k1 x Fmax angeschlossen, die die Regelabweichung in Form von elektrischen Signalen einer Schaltung 15 zuführt. In dieser Schaltung 15 werden somit in Abhängigkeit von den ermittelten Kräften und deren Arbeitspunkt BremsdruckSteuersignale in Form von mindestens einem Druckaufbauimpuls F x t einem Aktivator 16 zugeführt. Um eine Schwingungsanregung des Fahrwerks zu vermeiden, werden in der Schaltung 15 zum Druckaufbau vorzugsweise mehrere schnell aufeinanderfolgende Teilaufbauimpulse gebildet und dem Aktivator zugeführt.

Mit dem Ausgang der Logikeinheit 13 ist neben der Einheit 14 ein Beobachter 17 verbunden, dem die gefilterten Kraftsignale F1 bis F4 der Radkraft- oder Reifsensoren und die Fmax- und Fmin Signale zugeführt werden. In dem Beobachter wird durch Auswertung verschiedener Informationen, die in der Logikschaltung verknüpft und/oder erzeugt werden, und die mit den Kraftsignalen verglichen werden, eine Situationserkennung durchgeführt, deren über den Vergleich gewonnene Informationen in die Logikschaltung 13, die Einheit 14 und die Schaltung 15 zurückgeführt und bei der Bestimmung der Größen Fmax, Fmin, k1 x Fmax sowie F x t berücksichtigt werden.

Figur 2 hat den grundsätzlichen Verfahrensablauf zum Gegenstand, der zum Eintritt in die ABS- oder ASR-Funktion führt. Logische Verzweigungen sind im Flußdiagramm als Rauten dargestell.

Ausgehend von einer gegebenen, zu bestimmenden Situation (Start 20) wird zunächst in Raute 21 festgestellt ob ein Bremsvorgang vorliegt oder nicht. Hierzu kann die Longitudinalbeschleunigung along mit einem Schwellenwert verglichen werden. Liegt der Wert along unter einem Schwellenwert alongmin, so bedeutet das nichts anderes, als daß eine negative Longitudinalbeschleunigung vorliegt, also eine Verzögerung, die - vereinfacht betrachtet -auf einen Bremsvorgang schließen lässt. Liegt die Longitudinalbeschleunigung oberhalb des Schwellenwertes, dann befindet sich das Fahrzeug in einer beschleunigten oder konstanten Fahrt, die einen Bremsvorgang ausschließt. Hat der vorhergehende Durchlauf auf Bremsvorgang erkannt, wird in Raute 22 eine Instabilität am Rad abgefragt. Liegt eine Instabilität vor und ist die ABS-Funktion aktiv, wird in die ABS-Regelung (ABS-Block 23) gemäß Figur 3 eingetreten.

Wird dahingegen in Raute 21 festgestellt, daß kein Bremsvorgang vorliegt, wird in Raute 24 abgefragt, ob eine Vortriebsinstabilität am Rad vorhanden ist und die ASR-Funktion aktiv geschaltet ist. In diesem Fall wird in die ASR-Regelung (ASR-Block 25) gemäß Figur 4 eingetreten. Sind in Raute 22 oder in Raute 24 keine Radinstabilitäten festgestell worden, ist eine Regelung nicht erforderlich. Es wird auf den Start 20 der Abfrage zurückgeschaltet und die Abfrage ständig aufs Neue durchfahren.

Der Verfahrensablauf der ABS-Regelung wird nun anhand von Figur 3 in Verbindung mit der Figur 5 erläutert, in der stark vereinfacht die Zusammenhänge zwischen Raddrehzahl v, Druck p, und Kraftsignal F während eines geregelten Bremsvorganges auf homogenen Reibwert veranschaulicht sind. Zum Zeitpunkt t1 wird das in einer Druckaufbauphase befindliche, hier betrachtete Rad x instabil. In der Radbremse dieses Rades herrscht zu diesem Zeitpunkt der Bremsdruck p. Zur Bestimmung der Kraft zwischen Reifen und Fahrbahn zum Zeitpunkt t1 wird zunächst in Raute 30 der Eintritt in diesen mittels den von herkömmlichen Raddrehlzahlsensoren bestimmten Bremsschlupf, bei dem das Rad x instabil wird, im ersten ABS-Regelzyklus abgefragt. Gleichzeitig wird das anhand von Radkraft- oder Reifensensoren ermittelte Kraftsignal Fmax, bei dem eine eindeutige Bremsschlupfzunahme oder entsprechende Verzögerung (Reduktion der Radumfangsgeschwindigkeit) am Rad festgestellt wird, zum Zeitpunkt tl, bei dem das betrachtete Rad instabil wird, bestimmt und gespeichert(31). Der elektronische Regler schließt aufgrund der festgestellten Blockierneigung das Einlaßventil der Bremsanlage, so daß selbst bei weiter steigendem Betätigungsdruck, der Bremsdruck p zum Zeitpunkt t2 nicht mehr erhöht werden kann. Die mittels Radkraft- oder Reifensensoren bestimmt Kraft reduziert sich in der Druckhaltephase bei zunehmenden Bremschlupf, da der Kraftschluß zwischen Reifen und Fahrbahn abnimmt. Nimmt bis zum Zeitpunkt t3 der Bremsschlupf trotz konstanten Bremsdrucks p weiterhin zu, wird ein Druckabbau 32 eingeleitet. Der elektronische Regler hält zu diesem Zweck das Einlaßventil geschlossen und öffnet für kurze Zeit das Auslaßventil. In Raute 33 wird abgefragt, ob eine Wiederbeschleunigung der Räder (Zunahme der Radumfangsgeschwindigkeit) aus dem Bremsschlupf aufgrund des Druckabbaus in den Radbremsen stattgefunden hat. Wird in dem Durchlauf in Raute 33 festgestellt, daß eine Wiederbeschleunigung der Räder nicht stattgefunden hat, so wird der Druckabbau 32 erneut durchlaufen. Ist in Raute 33 eine Wiederbeschleunigung des Rades x festgestellt worden, d. h das Rad x befindet sich in einem Bereich eines Radumkehrpunktes der Geschwindigkeit oder der Beschleunigung, wird in 34 das mittels Radkraft- oder Reifensensoren ermittelte Kraftsignal Fmin, bei dem eine Wiederbeschleunigung aus dem Bremsschlupf stattfindet, zum Zeitpunkt t4 bestimmt und gespeichert. Der ABS-Regelzyklus wird in 35 aktiv gesetzt, d.h. auf den Regelkreis 43 umgeschaltet.

und die weitere Bremsregelung mittels den von den Radkraft-oder Reifensensoren ermittelten Kraftsignale als Regelgrößen fortgesetzt. Nachdem die Fmax- und Fmin-Bestimmung abgeschlossen ist und damit der Arbeitspunkt bzw. ein Arbeitsbereich im ersten ABS-Regelzyklus bestimmt ist, wird mit Erreichen der Stabilität zum Zeitpunk t5 die Bemessung und/oder Modulation des Bremsdruckes nach der Beziehung F = k1 x Fmax in Schritt 36 eingestellt. k1 < 1 ist ein Proportionalitätsfaktor mittels dem eine Kraft unterhalb von Fmax eingestellt wird. Damit der damit erzeugte Impuls F x t nicht zur Schwingungsanregung des Fahrwerks führt, werden in Schaltung 15 die Kraftsignale in die Stellgrößen, vorzugsweise Bremsdrücke (oder Ventilschaltzeiten, u.dgl.) transformiert, und in Form von mehreren, schnell aufeinander folgenden Teilaufbauimpulsen in die Radbremsen eingesteuert.

Nachdem der Radschlupf abgebaut und der mit den ermittelten Kraftsignalen korrespondierende Bremsdruck eingestellt ist, wird die Beobachtung mittels Beobachter 17 von Kraft und Bremsschlupf bzw. Verzögerung am Rad x eingeleitet.

Figur 6 in Verbindung mit der Figur 3 erläutert die stark vereinfachten Zusammenhänge zwischen Raddrehzahl v, Druck p, und Kraftsignal F während eines geregelten Bremsvorganges auf abnehmendem Reibwert. Bis zum Zeitpunkt t7 entspricht der Verfahrensablauf dem in Zusammenhang mit Figur 5 beschriebenen Verlauf der Fmax und Fmin-Bestimmung und der sich anschließenden Bremskraftregelung über die mittels der Radkraft- oder Reifensensoren ermittelten Kraftsignale F1 bis F4. Wird dabei erneut das in einer Druckaufbauphase befindliche, hier betrachtete Rad x zum Zeitpunkt t7 instabil, z.B. aufgrund abnehmenden Reibwertes, wird der Arbeitspunkt und/oder Arbeitsbereich der Regelgröße(n) mit Hilfe des Radschlupfes - wie vorstehend in Verbindung mit Figur 5 beschrieben -neu eingestellt. Aufgrund des abnehmenden Reibwertes kommt es zu weiteren Regelzyklen, in denen jede auftretende Istabilität des Rades x zu einer Fmax2- und Fmin2-bis FmaxY- und FminY- Bestimmung mittels der Signale der herkömmlichen Radsensoren führt. Dabei geht in die der ersten Fmax- und Fmin- Bestimmung folgenden Bemessung und/oder Modulation des Bremsdrucks aufgrund der Beziehung F = $k_{1max2}$ x Fmax2, der Proportionalitätsfaktor $k_{1max2}$ ein, der die Höhe des Bremsdruckabbaues in der vorangegangenen Instabilität und die Verzögerung des Rades x in der Instabilitätsphase berücksichtigt.

Figur 7 zeigt die Änderung der Geschwindigkeit eines Rades während einer Blockierschutzregelung, den Bremsdruck im Rad und die Änderung der Kraft zwischen Reifen und Fahrbahn zur gleichen Zeit bei zunehmendem Reibwert

Bis zum Zeitpunkt t8 entspricht der Verfahrensablauf dem in Zusammenhang mit Figur 5 beschriebenen Verlauf der Fmax und Fmin-Bestimmung und der sich anschließenden Bremskraftregelung über die mittels der Radkraft- oder Reifensensoren ermittelten Kraftsignale. Tritt infolge zunehmenden Reibwertes und konstanter Druckvorgabe des Fahrers die in Raute 37 abgefragte Beziehung F < k1 x Fmax ein, bei der die mittels Radkraft- oder Reifensensoren ermittelte Längskraft F zwischen Reifen und Fahrbahn kleiner ist als der mit dem(n) Kraftsignal(en) k1 x Fmax eingestellte Bremsdruck zum Zeitpunkt t9, wird der ABS-Regelzyklus vorzeitig nach der Beziehung

$$T_{ABS\ ASR} = \frac{T_0}{k_1 \cdot F_{max} - F}$$

beendet, wobei k1 eine Proportionalkonstante, $T_0$ = eine nominale Zeit zwischen 60 bis 90 ms, vorzugsweise 70 bis 80 ms und $T_{ABS/ASR}$ die der Differenz k x Fmax indirekt proportionale Austrittszeit ist.

Der Verfahrensablauf nach Figur 3 wird aufs Neue durchfahren, wobei der Arbeitspunkt und/oder Arbeitsbereich (Fmax2, Fmin2 der Figur 7)der Regelgröße (n) mit Hilfe des ermittelten Radschlupfes unter Berücksichtigung der höheren Reibwertverhältnisse bei einer neu auftretenden Instabilität des Rades x neu eingestellt wird.

Wird in Raute 37 festgestellt, daß das mittels Radkraft-oder Reifensensoren ermittelte Kraftsignal F nicht kleiner k1 x Fmax ist, wird in Raute 38 die Beziehung $F \approx k_1 * F_{max}$ abgefragt. Entspricht die mittels der Sensoren ermittelte Ist-Kraft F im Wesentlichen dem Produkt k1 x Fmax, wird zum Zeitpunkt t6 (Figur 5)im Zeitfenster von 100 bis 200ms vorzugsweise sofort nach der Entscheidung oder nach bestimmten Stabilitätskriterien, im Schritt 39.1 ein Druckaufbauimpuls in die Radbremse eingesteuert. Die Größe des Druckaufbauimpulses kann aus der verbleibenden oder aktuellen Regelabweichung Fmax - Fmax x k1 mit dem Bremsdruck pi zum Zeitpunkt t6 abgeleitet oder mittels eines konstanten Faktors, aus einer Tabelle, einer Kennlinie gebildet werden. Wird mittels der Reifenkraft-oder Reifensensoren eine Zunahme der Ist-Kraft F ermittelt, ohne däß die herkömmlichen Raddrehzahlsensoren eine Zunahme der Verzögerung am Rad erfassen, ist der in die Radbremse eingesteuerte Bremsdruck unterhalb des maximalen möglichen Bremsdruckes. Es wird auf eine Bremskraft geschlossen, die unterhalb der maximal möglichen Bremskraft liegt, bei der eine vollständige Kraftschlußausnutzung vorliegt, die dem momentanen Reibwert entspricht. Der Arbeitspunkt bzw. ein Arbeitsbereich der Regelgröße 'Kraft F' wird mit Hilfe des Radschlupfes neu eingestellt. Hierzu wird im Schritt 39.2 eine Aktualisierung des Arbeitspunktes über eine Korrektur der Kräfte Fmax und Fmin vorgenommen. Es wird nach einem Ausführungsbeispiel die Regelung ab Raute 37 aufs Neue durchlaufen. Wird nach dem ersten Druckaufbauimpuls in Raute 38 immer noch $F \approx k_1 * F_{max}$ festgestellt, kommt es zu einem weiteren Druckaufbauimpuls in Schritt 39.1. Der nächste Durchlauf der Bestimmung der aktuellen Kraft setzt erneut - nachdem in Schritt 39.1 ein weiterer oder mehrere Druckaufbauimpuls(e) in die Radbremse eingesteuert wurden - ein. Durch dieses bevorzugt bei hoher Fahrzeugverzögerung oder hohem Kraftschluß Fmax zwischen Reifen und Fahrbahn vorsichtige Herantasten an das Kraftmaximum mit kleinen Druckaufbauimpulsen, wird die Ist-Kraft F schrittweise erhöht, bis in Raute 38 festgestellt wird, daß die mittels Radkraft- oder Reifensensoren ermittelte Ist-Kraft F nicht mehr im Wesentlichen der eingestellten Kraft k1 x Fmax entspricht. Es wird dann weiter in Raute 40 abgefragt, ob die mittels Radkraft- oder Reifensensoren ermittelte Kraft F > k1 x Fmax ist oder die Verzögerung des Rades x zunimmt, während eine Zunahme der Ist-Kraft F nicht ermittelt werden kann. Ausgehend von der Feststellung in Raute 40, wird bei F > k1 x Fmax auf eine vollständige Kraftschlußausnutzung geschlossen. Das betrachtete Rad x befindet sich auf dem Maximum der $\mu$-Schlupf-Kurve. Im Schritt 41 wird dann vorsorglich mindestens ein kurzer Druckabbauimpuls über die Zeitspanne von ca. $tp \approx 2ms$ in die Radbremse eingesteuert, bis $F \leq k_2 * F_{min}$ ist, mit k2 > 1. Anschließend wird der Ablauf nach Figur 3 erneut durchlaufen.

Nach einem weiteren Ausführungsbeispiel, wird bevorzugt bei niedrigem Kraftschluß Fmax und niedriger Fahrzeugverzögerung im Schritt 39.1 ein massiver Druckaufbau, d. h. ein über den möglichen Kraftschluß zwischen Reifen und Fahrbahn bewirkender Druckaufbau in der Radbremse vorgenommen, die in Schritt 39.2 dadurch zu einer Korrektur von Fmax und Fmin führt, daß das betrachtete Rad instabil wird und der Verfahrensablauf nach Figur 3 aufs neu durchlaufen wird.

Der Verfahrensablauf der ASR-Regelung wird nun anhand von Figur 4 erläutert. Zu einem Zeitpunkt wird das angetriebene, hier betrachtete Rad x instabil. Auf das Rad wird zu diesem Zeitpunkt ein Antriebsmoment aufgebracht, welches die Neigung des Rades x zum Durchdrehen bewirkt. Zur Bestimmung der Kraft zwischen Reifen und Fahrbahn zu diesem Zeitpunkt wird zunächst in Raute 50 der Eintritt in diesen mittels den von herkömmlichen Raddrehlzahlsensoren bestimmten Antriebsschlupf, bei dem das Rad x instabil wird, im ersten ASR-Regelzyklus abgefragt. Gleichzeitig wird das anhand von Radkraft- oder Reifensensoren ermittelte Kraftsignal Fmax, bei dem eine eindeutige Antriebsschlupfzunahme oder entsprechende Beschleunigung (Erhöhung der Radumfangsgeschwindigkeit) am Rad festgestellt wird, bestimmt und gespeichert(51). Der elektronische Regler reduziert das Antriebsmoment aufgrund der festgestellten Durchdrehneigung des Rades x. Hierzu schließt er beispielsweise das Trennventil der bekannten Bremsanlage, so daß von einer Hilfsdruckquelle bei geöffnetem Einlaß- und geschlossenem Auslaßventil Bremsdruckmittel in die Radbremse eingesteuert werden kann. Darüber hinaus kann er das Motormoment reduzieren. Die mittels Radkraft- oder Reifensensoren bestimmte Kraft erhöht sich aufgrund der eingeleiteten Reduzierung des Antriebsmoments bei abnehmendem Antriebsschlupf, da der Kraftschluß zwischen Reifen und Fahrbahn zunimmt. In Raute 53 wird abgefragt, ob eine Antriebsmomentenreduzierung bzw. Verzögerung der Räder aus dem Antriebsschlupf aufgrund der Antriebsmomentenreduzierung stattgefunden hat. Wird in dem Durchlauf in Raute 53 festgestellt, daß eine Antriebsmomentenreduzierung und/oder Verzögerung der Räder bzw. Antriebsschlupfabnahme nicht stattgefunden hat, so wird der Druckaufbau und/oder die Antriebsmomentenreduzierung 52 erneut durchlaufen. Ist in Raute 53 eine Antriebsschlupfabnahme und/oder Verzögerung des Rades x festgestellt worden, d. h das Rad x befindet sich in einem Bereich eines Radumkehrpunktes der Geschwindigkeit oder der Beschleunigung (Verzögerung aus dem Vortriebsschlupf, wird in 54 das mittels Radkraft- oder Reifensensoren ermittelte Kraftsignal Fmin, bei dem eine Verzögerung aus dem Antriebsschlupf oder eine Wiederbeschleunigung aus dem Schlupf stattfindet, zu diesem Zeitpunkt bestimmt und gespeichert. Der ASR-Regelzyklus wird aktiv gesetzt, d.h auf den Regelkreis 70 umgeschaltet und die weitere Traktionsregelung mittels den von den Radkraft- oder Reifensensoren ermittelten Kraftsignale als Regelgrößen fortgesetzt. Nachdem die Fmax- und Fmin-Bestimmung abgeschlossen ist und damit der Arbeitspunkt bzw. ein Arbeitsbereich im ersten ASR-Regelzyklus bestimmt ist, wird mit Erreichen der Stabilität die Bemessung und/oder Modulation des Antriebsmomentes nach der Beziehung F = k1 x Fmax in Schritt 56 eingestellt. k1 < 1 ist ein Proportionalitätsfaktor mittels dem eine Kraft unterhalb von Fmax eingestellt wird. Damit der damit erzeugte Impuls F x t nicht zur Schwingungsanregung des Fahrwerks führt, werden in Schaltung 15 die Kraftsignale in die Stellgrößen, vorzugsweise Bremsdrücke und/oder Motormomente, u.dgl. transformiert und gestuft eingestellt.

Nachdem der Radschlupf abgebaut und das mit den ermittelten Kraftsignalen korrespondierende Antriebsmoment eingestellt ist, wird die Beobachtung mittels Beobachter 17 von Kraft und Antriebsschlupf bzw. Beschleunigung am Rad x eingeleitet.
Wird dabei das hier betrachtete Rad x zu einem Zeitpunkt erneut instabil, z.B. aufgrund abnehmenden Reibwertes, wird der Arbeitspunkt und/oder Arbeitsbereich der Regelgröße(n) mit Hilfe des Radschlupfes - wie vorstehend in Verbindung mit Figur 4 beschrieben -neu eingestellt.

Tritt infolge zunehmenden Reibwertes und/oder reduzierter Antriebsmomentenvorgabe des Fahrers die in Raute 57 abgefragte Beziehung F < k1 x Fmax ein, bei der die mittels Radkraft- oder Reifensensoren ermittelte Längskraft F zwischen Reifen und Fahrbahn kleiner ist als die mit dem(n) Kraftsignal(en) k1 x Fmax eingestellte Antriebsmomentenvorgabe und wird die Rücknahme der Antriebsmomentenvorgabe durch den Fahrer in Raute 58 festgestellt, wird der ASR-Regelzyklus in Schritt 60 vorzeitig nach der Beziehung

$$T_{ABS/ASR} = \frac{T_0}{k_1 \cdot F_{max} - F}$$

mit der, der Differenz k1 x Fmax-F indirekt proportionalen Austrittszeit beendet, wobei k1 eine Proportionalkonstante, $T_0$ = eine nominale Zeit zwischen 60 bis 90 ms, vorzugsweise 70 bis 80 ms und $T_{ABS/ASR}$ die Austrittszeit ist. Wird in Raute 58 dagegen keine Antriebsmomentenrücknahme durch den Fahrer festgestellt, so wird weiter in Raute 59 abgefragt, ob eine Reibwertzunahme vorliegt. Ist eine Zunahme des Reibwerts über eine Beobachtung der Antriebsmomentzugabekraft proportional mit der Beobachtung von dem Beschleunigungsverhalten des Rades festgestellt worden, wird der ASR-Regelzyklus in Schritt 60 ebenfalls vorzeitig nach der Beziehung

$$T_{ABS/ASR} = \frac{T_0}{k_1 \cdot F_{max} - F}$$

mit der, der Differenz k1 x Fmax-F indirekt proportionalen Austrittszeit beendet, wobei k1 eine Proportionalkonstante, $T_0$ = eine nominale Zeit zwischen 60 bis 90 ms, vorzugsweise 70 bis 80 ms und $T_{ABS/ASR}$ die Austrittszeit ist. Wenn aber in Raute 59 festgestellt wird, daß keine Reibwertzunahme vorliegt, wird in Schritt 61 auf eine Reduzierung des Reibwertes geschlossen und eine Neufindung des ASR-Arbeitspunktes oder eines ASR-Arbeitsbereiches über den Antriebsschlupf eingeleitet, wie er vorstehend beschrieben ist.

Der Verfahrensablauf nach Figur 4 wird dabei aufs Neue durchfahren, wobei der Arbeitspunkt und/oder Arbeitsbereich (Fmax, Fmin) der Regelgröße(n) mit Hilfe des ermittelten Radschlupfes unter Berücksichtigung der geringeren Reibwertverhältnisse bei einer neu auftretenden Instabilität des Rades x neu eingestellt wird.

wird in Raute 57 festgestellt, daß das mittels Radkraft-oder Reifensensoren ermittelte Kraftsignal F nicht kleiner k1 x Fmax ist, wird in Raute 62 die Beziehung $F \approx k_1 * F_{max}$ abgefragt. Entspricht die mittels der Sensoren ermittelte Ist-Kraft F im Wesentlichen dem Produkt k1 x Fmax, erfolgt im Zeitrahmen von 100ms sofort nach der Entscheidung oder nach bestimmten Stabilitätskriterien im Schritt 63.1 eine Kraftprüfung durch die Einsteuerung einer Antriebsmomentenzugabe. Die Größe der Antriebsmomentenzugabe kann mittels eines konstanten Faktors, aus einer Tabelle oder einer Kennlinie gebildet werden. Wird mittels der Reifenkraft- oder Reifensensoren eine Zunahme der Ist-Kraft F ermittelt, ohne daß die herkömmlichen Raddrehzahlsensoren eine Zunahme der Beschleunigung am Rad erfassen, wird auf eine zu geringe Antriebskraft geschlossen, die unterhalb der maximal möglichen Vortriebskraft liegt, bei der eine vollständige Kraftschlußausnutzung vorliegt, die dem momentanen Reibwert entspricht. Der Arbeitspunkt bzw. ein Arbeitsbereich der Regelgröße Kraft F' kann mit Hilfe des Radschlupfes neu eingestellt werden. Hierzu wird im Schritt 63.2 eine Aktualisierung des Arbeitspunktes über eine Korrektur der Kräfte Fmax und Fmin vorgenommen. Es wird nach einem Ausführungsbeispiel die Regelung ab Raute 57 aufs Neue durchlaufen. Wird nach der ersten Antriebsmomentenzugabe in Raute 62 immer noch $F \approx k_1 * F_{max}$ festgestellt, kommt es zu einer weiteren Antriebsmomentenzugabe in Schritt 63.1. Der nächste Durchlauf der Bestimmung der aktuellen Kraft setzt erneut - nachdem in Schritt 63.1 eine weitere oder mehrere Antriebsmomentenzugabe(n) eingesteuert wurden - ein. Durch dieses bevorzugt bei hoher Fahrzeugbeschleunigung oder hohem Kraftschluß Fmax zwischen Reifen und Fahrbahn vorsichtige Herantasten an das Kraftmaximum mit kleinen Antriebsmomentzugaben, wird die Ist-Kraft F schrittweise erhöht, bis in Raute 62 festgestellt wird, daß die mittels Radkraft- oder Reifensensoren ermittelte Ist-Kraft F nicht mehr im Wesentlichen der eingestellten Kraft k1 x Fmax entspricht. Es wird dann weiter in Raute 64 abgefragt, ob die mittels Radkraft- oder Reifensensoren ermittelte Kraft F > k1 x Fmax ist oder die Beschleunigung des Rades x zunimmt, während eine Zunahme der Ist-Kraft F nicht ermittelt werden kann. Ausgehend von der Feststellung in Raute 64, wird bei F > k1 x Fmax auf eine vollständige Kraftschlußausnutzung geschlossen. Das betrachtete Rad x befindet sich auf dem Maximum der $\mu$-Schlupf-Kurve. Im Schritt 65 wird dann vorsorglich mindestens eine geringe Antriebsmomentenreduzierung über eine Zeitspanne von ca. tp $\approx 2ms$ eingesteuert, bis $F \leq k_2 * F_{min}$ ist, mit k2 > 1. Anschließend wird der der Ablauf nach Figur 4 erneut durchlaufen.

Nach einem weiteren Ausführungsbeispiel, wird bevorzugt bei niedrigem Kraftschluß Fmax und niedriger Fahrzeugbeschleunigung im Schritt 63.1 eine massive Antriebsmomentenzugabe, d. h. ein über dem möglichen Kraftschluß zwischen Reifen und Fahrbahn liegende Antriebsmomentenzugabe vorgenommen, die in Schritt 63.2 dadurch zu einer Korrektur von Fmax und Fmin führt, daß das betrachtete Rad instabil wird und der Verfahrensablauf nach Figur 4 aufs Neue durchlaufen wird.

**Patentansprüche**

1. verfahren zur Regelung des Fahrverhaltens eines Fahrzeugs, bei dem auf Räder und Reifen wirkende Kräfte mit Radkraft- oder Reifensensoren ermittelt und als Regelgröße(n) für ein Kraftfahrzeug-Regelungssystem, wie ABS, ASR, EHB etc. eingesetzt werden und bei dem die Regelgrößen zur Bemessung und/oder Modulation des Bremsdruckes in den Radbremsen der Räder und/oder des Antriebsmoments herangezogen werden, **dadurch gekennzeichnet, daß** der Arbeitspunkt und/oder Arbeitsbereich der Regelgröße(n) mit Hilfe des ermittelten Radschlupfes eingestellt wird.

2. Verfahren nach Anspruch 1, **dadurch gekennzeichnet, daß** der Arbeitspunkt und/oder der Arbeitsbereich der Regelgröße(n) in Abhängigkeit von mit konventionellen Sensoren ermittelten und/oder berechneten Größen, wie Raddrehzahlen und Fahrzeug-Referenzgeschwindigkeit u.dgl., bestimmt wird.

3. Verfahren nach Anspruch 1 oder 2, **dadurch gekennzeichnet, daß** auf Basis der mit den konventionellen Sensoren ermittelten Größen ($V_1$, $V_2$, $V_3$, $V_4$, $V_{Ref}$) mindestens der kritische Radschlupf und /oder mindestens ein Radschlupf im ABS- oder ASR-Regelbereich bei gleichzeitiger Ermittlung der Kräfte ($F_{max}$, $F_{min}$) mittels der Radkraft- oder Reifensensoren bestimmt wird.

4. Verfahren nach einem der Ansprüche 1 bis 3, **dadurch gekennzeichnet, daß** eine Kraft ($F_{max}$) bei einer Brems- oder Antriebsschlupfzunahme und/ oder einer Beschleunigung der Räder und eine Kraft ($F_{min}$) im Bereich eines Radumkehrpunktes der Geschwindigkeit oder deren Ableitung, in einem ersten ABS- oder ASR-Regelzyklus bestimmt werden.

5. Verfahren nach Anspruch 4, **dadurch gekennzeichnet, daß** die Kraft $F_{max}$ am Beginn der Bremsoder Antriebsschlupfzunahme und/oder der Beschleunigung der Räder des ersten ABS- oder ASR-Regelzyklus bestimmt wird.

6. Verfahren nach einem der Ansprüche 1 bis 5, **dadurch gekennzeichnet, daß** die Kraft $F_{min}$ beim Auftreten einer positiven Beschleunigung aus dem Bremsschlupf oder einer negativen Beschleunigung aus dem Vortriebsschlupf der Räder des ersten ABS- oder ASR-Regelzyklus bestimmt wird.

7. Verfahren nach einem der Ansprüche 1 bis 6, **dadurch gekennzeichnet, daß** der Arbeitspunkt und/ oder der Arbeitsbereich der Regelgröße(n) bei jeder Instabilität der Räder mit Hilfe des Radschlupfes neu eingestellt wird.

8. Verfahren nach einem der Ansprüche 1 bis 7, **dadurch gekennzeichnet, daß** beim Eintritt in den Fahrstabilitätsbereich, die Bemessung und/oder Modulation des Bremsdruckes und/oder des Antriebsmomentes nach der Beziehung

$$F = k_1 \times F_{max}$$

mit $k_1$ = Proportionalitätsfaktor

F = Ist-Längskraft zwischen Reifen und Fahrbahn

geregelt wird.

9. Verfahren nach einem der Ansprüche 1 bis 8, **dadurch gekennzeichnet, daß** während der ABS-Bremsung oder dem ASR-Vortrieb das Produkt ($k_1$ x $F_{max}$) aus der maximalen Kraft ($F_{max}$) und einem Proportionalfaktor ($k_1$), in den eine Zeitspanne $t_{Impuls}$ vom Beginn der Kraftänderung durch den Aufbau und/oder die Modulation des Bremsdruckes und/oder des Antriebsmomentes bis zu deren Ende einfließt, nach der Beziehung

$$F = k_1 \times F_{max}$$

mit $k_1$= Proportionalitätsfaktor

F = Ist-Längskraft zwischen Reifen und Fahrbahn

überwacht wird, und daß, wenn das Produkt $k_1 \times F_{max}$ größer ist als die mit den Radkraft- oder Reifensensoren gemessene Kraft (F), der ABS- oder ASR-Regelzyklus vorzeitig nach der Beziehung

$$T_{ABS/ASR} = \frac{T_0}{k_1 \cdot F_{max} - F}$$

beendet wird, wobei $T_0$ eine nominale Zeit und $T_{ABS/ASR}$ die Austrittszeit ist.

**10.** Verfahren nach Anspruch 9, **dadurch gekennzeichnet, daß** als Nennbetrag $T_0$ eine Zeit zwischen 60 bis 90 ms, vorzugsweise 70 bis 80 ms, vorgesehen wird.

**11.** Verfahren nach einem der Ansprüche 1 bis 10, **dadurch gekennzeichnet, daß** während der ABS-Bremsung oder dem ASR-Vortrieb das Produkt ($k_1 \times F_{max}$) aus der maximalen Kraft ($F_{max}$) und einem Proportionalitätsfaktor ($k_1$), in den eine Zeitspanne $t_{Impuls}$ vom Beginn der Kraftänderung durch den Aufbau und/oder die Modulation des Bremsdruckes und/oder des Antriebsmomentes bis zu deren Ende einfließt, nach der Beziehung

$$F = k_1 \times F_{max}$$

mit $k_1$= Proportionalitätsfaktor

F= Ist-Längskraft zwischen Reifen und Fahrbahn

überwacht wird, und daß, wenn das Produkt $k_1 \times F_{max}$ in etwa der mit den Radkraft- oder Reifensensoren ermittelten Kraft (F) entspricht, in einem nominalen Zeitfenster eine Modulation des Bremsdrukkes durch einen Druckaufbauimpuls und/oder eine Antriebsmomentenzugabe in das Regelungssystem eingesteuert wird, wobei die negative Beschleunigung der Räder und die Veränderung der Kraft F ermittelt werden und eine Bewertung der ermittelten Größen dahingehend erfolgt, daß bei zunehmender Kraft (F) und nahezu gleichbleibender Beschleunigung der Arbeitspunkt neu bestimmt wird.

**12.** Verfahren nach Anspruch 11, **dadurch gekennzeichnet, daß** die maximale Kraft ($F_{max}$) oder die Beschleunigung durch Vergleich mit einem Schwellenwert bewertet wird und beim Überschreiten des Schwellenwertes durch eine Erhöhung des Bremsdruckes und/oder eine Antriebsmomentenzugabe eine Instabilität ausgelöst wird, die eine Einstellung des Arbeitspunktes nach einem der Ansprüche 1 bis 6 oder nach Anspruch 7 initiiert.

**13.** Verfahren nach Anspruch 11, **dadurch gekennzeichnet, daß** die maximale Kraft ($F_{max}$) oder die Beschleunigung durch Vegleich mit einem Schwellenwert bewertet wird und beim Überschreiten des Schwellenwertes durch eine Erhöhung des Bremsdruckes über das Einsteuern von mindestens einem Druckaufbauimpuls, in der Regel über das Einsteuern mehrerer Druckaufbauimpulse und/oder mindestens einer Antriebsmomentenzugabe in das Regelungssystem, die ermittelte Kraft (F) an die maximale Kraft ($F_{max}$) herangeführt und ein neuer Arbeitspunkt eingestellt wird.

**14.** Verfahren nach Anspruch 11, **dadurch gekennzeichnet, daß** das nominale Zeitfenste zwischen 100 und 200ms liegt.

**15.** Verfahren nach einem der Ansprüche 1 bis 9, **dadurch gekennzeichnet, daß** während der ABS-Bremsung oder dem ASR-Vortrieb das Produkt ($k_1 \times F_{max}$) aus der maximalen Kraft ($F_{max}$) und einem Proportionalitätsfaktor ($k_1$), in den eine Zeitspanne $t_{Impuls}$ vom Beginn der Kraftänderung durch den Aufbau und/oder die Modulation des Bremsdruckes und/oder des Antriebsmomentes bis zu deren Ende einfließt, nach der Beziehung

$$F = k_1 \times F_{max}$$

mit $k_1$= Proportionalitätsfaktor

F= Ist-Längskraft zwischen Reifen und Fahrbahn

überwacht wird, und daß, wenn das Produkt $k_1 \times F_{max}$ kleiner ist als die mit den Radkraft- oder Reifensensoren ermittelte Kraft (F), eine Kraftänderung durch den Aufbau und/oder die Modulation des Bremsdruckes und/oder das Antriebsmoment in das Regelungssystem eingeleitet wird, bis die gemessene Kraft (F) kleiner/gleich $k_2 \times F_{min}$ ist, mit $k_2$>1.

**16.** Verfahren zur Verringerung des Bremsweges eines mindestens zweiachsigen, vierrädrigen Kraftfahrzeugs unter Verwendung des Verfahrens nach einem der Ansprüche 1 bis 15, **gekennzeichnet durch** eine auf Radkraft- oder Reifensensorsignalen basierenden Regelung einer ersten Regelgröße, deren auf dem Kraftschluß zwischen Reifen und Fahrbahn basierender Sollwert, mit einer zweiten Regelgröße bestimmt wird.

## Claims

**1.** Method of controlling the performance of a motor vehicle according to which the forces acting upon wheels and tires are detected by wheel force and tire sensors and are used as controlled variable(s) for a motor vehicle control system, such as ABS, TCS, EHB, etc., and wherein the controlled variables are used to proportion and/or modulate the brake pressure in the wheel brakes of the wheels and/or the drive torque, **characterized in that** the working point and/or operative range of the controlled variable(s) is adjusted by means of the detected wheel slip.

**2.** Method according to claim 1, **characterized in that** the working point and/or the operative range of the controlled variable(s) are determined subject to variables, e.g. wheel speeds, vehicle reference speed, etc., detected and/or calculated by means of conventional sensors.

**3.** Method according to claim 1 or 2, **characterized in that** at least the critical wheel slip and/or at least one wheel slip in the ABS or TCS control range is determined simultaneously with the detection of the forces ($F_{max}$, $F_{min}$) by means of the wheel speed or tire sensors on the basis of the values (V1, V2, V3, V4, $V_{ref}$) detected by conventional sensors.

**4.** Method according to any one of claims 1 to 3, **characterized in that** a force ($F_{max}$) is determined in a first ABS or TCS control cycle in case of an increase of the brake or traction slip and/or an acceleration of the wheels and a force ($F_{min}$) is determined in the range of the wheel reversing point of the speed or its derivative.

**5.** Method according to claim 4, **characterized in that** the force $F_{max}$ is determined at the beginning of the brake or traction slip increase and/or the acceleration of the wheels in the first ABS or TCS control cycle.

**6.** Method according to any one of claims 1 to 5, **characterized in that** the force $F_{min}$ is determined in the presence of a positive acceleration from the brake slip or a negative acceleration from the traction slip of the wheels of the first ABS or TCS control cycle.

**7.** Method according to any one of claims 1 to 6, **characterized in that that** the working point and/or the operative range of the controlled variable(s) are adjusted again by means of the wheel slip with each instability of the wheels.

**8.** Method according to any one of claims 1 to 7, **characterized in that** the proportioning and/or modulation of the brake pressure and/or the drive torque is controlled according to the relation

$$F = k_1 \times F_{max}$$

with $k_1$ = proportionality factor

F = actual longitudinal force between tire and roadway

when entering the driving stability range.

**9.** Method according to any one of claims 1 to 8, **characterized in that** during the ABS braking maneuver or the TCS propulsion the product ($k_1$ x $F_{max}$) resulting from the maximum force ($F_{max}$) and a proportional factor ($k_1$) into which a period of time $t_{impulse}$ from the beginning of the change of force due to the build-up and/or the modulation of the braking force and/or the drive torque up to its end is introduced, is monitored according to the relation

$$F = k_1 \times F_{max}$$

with $k_1$ = proportionality factor

F = actual longitudinal force between tire and roadway

and that the ABS or TCS control cycle is concluded prematurely according to the relation

$$T_{ABS/TCS} = \frac{T_0}{k_1 * F_{max} - F}$$

if the product $k_1$ x $F_{max}$ is greater than the force (F) measured by means of wheel force or tire sensors, where $T_0$ is a nominal time and $T_{ABS/TCS}$ is the exiting time.

**10.** Method according to claim 9, **characterized in that** a time between 60 and 90 ms, preferably 70 to 80 ms, is foreseen as nominal amount $T_0$.

**11.** Method according to any one of claims 1 to 10, **characterized in that** during the ABS braking maneuver or the TCS propulsion the product ($k_1$ x $F_{max}$) resulting from the maximum force ($F_{max}$) and a proportionality factor ($k_1$), into which a period of time $t_{Impulse}$ from the beginning of the change of force due to the build-up and/or the modulation of the braking force and/or the drive torque up to its end is introduced, is monitored according to the relation

$$F = k_1 \times F_{max}$$

with $k_1$ = proportionality factor

F = actual longitudinal force between tire and roadway

and that a modulation of the brake pressure by means of a pressure build-up impulse and/or an added drive torque is introduced into the control system in a nominal time window, if the product $k_1$ x $F_{max}$ corresponds approximately to the force (F) determined in the wheel force or tire sensors, wherein the negative acceleration of the wheels and the change of force (F) is detected and the detected variables are evaluated in such a way that the working point is defined again with increasing force (F) and approximately constant acceleration.

**12.** Method according to claim 11, **characterized in that** the maximum force ($F_{max}$) or the acceleration is evaluated by comparison with a threshold value and that an instability is caused if the threshold value is exceeded by increasing brake pressure and/or an added drive torque, said instability initiating an adjustment of the working point according to any one of claims 1 to 6 or claim 7.

**13.** Method according to claim 11, **characterized in that** the maximum force ($F_{max}$) or the acceleration is evaluated by comparison with a threshold value and that the force (F) detected is approached to the maximum force ($F_{max}$) and a new working point is adjusted if the threshold value is exceeded by increasing the brake pressure by way of introducing at least one pressure build-up impulse, usually by way of introducing several pressure build-up impulses and/or at least the addition of a drive torque into the control system.

**14.** Method according to claim 11, **characterized in that** the nominal time window is between 100 and 200 ms.

**15.** Method according to any one of the claims 1 to 9, **characterized in that** during the ABS braking maneuver or the TCS propulsion, the product ($k_1$ x $F_{max}$) resulting from the maximum force ($F_{max}$) and a proportionality factor ($K_1$), into which a period of time $t_{Impulse}$ from the beginning of the change of force by the build-up and/or the modulation of the braking force and/or the drive torque up to its end is introduced, is monitored according to the relation

$$F = k_1 \times F_{max}$$

with $k_1$ = proportionality factor

F = actual longitudinal force between tire and roadway

and that a change of force is introduced into the control system by building up and/or modulating the brake pressure and/or the drive torque, if the product $k_1$ x $F_{max}$ is smaller than the force (F) detected by means of the wheel force or tire sensors, until the measured force (F) is lower than, or equal to, $k_2$ x $K_{min}$, with $k_2 > 1$.

**16.** Method of reducing the stopping distance of a motor vehicle with at least two axes and four wheels, using the method according to any one of the claims 1 to 15, **characterized by** a control of a first controlled variable which is based on wheel force or tire sensor signals, the nominal value of which is based on the frictional connection between tire and roadway and is defined by means of a second controlled variable.

**Revendications**

**1.** Procédé pour réguler la tenue de route d'un véhicule, dans lequel des forces agissant sur les roues et les pneus sont déterminées au moyen de capteurs de la force sur une roue ou de capteurs de pneu et sont utilisées comme grandeur(s) de régulation pour un système de régulation de véhicule automobile, tel que ABS, ASR, EHB, etc., et dans lequel les grandeurs de régulation sont utilisées pour dimensionner et/ou moduler la pression de freinage dans les freins des roues et/ou du moment d'entraînement, **caractérisé en ce que** le point de travail et/ou la plage de travail de la (des) grandeur(s) de régulation sont réglés à l'aide du glissement de roue déterminé.

**2.** Procédé selon la revendication 1, **caractérisé en ce que** le point de travail et/ou la plage de travail de la (des) grandeur(s) de régulation sont déterminés en fonction de grandeurs relevées et/ou calculées au moyen de capteurs classiques, telles que les vitesses de rotation des roues et la vitesse de référence du véhicule et similaires.

**3.** Procédé selon la revendication 1 ou 2, **caractérisé en ce que** sur la base des grandeurs ($V_1$, $V_2$, $V_3$, $V_4$, $V_{Ref}$) relevées au moyen des capteurs classiques, on détermine au moins le glissement de roue critique et/ou au moins un glissement de roue dans la plage de régulation ABS ou ASR avec détermination simultanée des forces ($F_{max}$, $F_{min}$) au moyen des capteurs de la force sur une roue ou de capteurs de pneu.

**4.** Procédé selon l'une des revendications 1 à 3, **caractérisé en ce qu'**on détermine une force ($F_{max}$) dans le cas d'une augmentation du glissement de freinage ou du glissement d'entraînement et/ou dans le cas d'une accélération des roues, ainsi qu'une force ($F_{min}$) dans la zone d'un point d'inversion de roue de la vitesse ou de sa dérivée, dans un premier cycle de régulation ABS ou ASR.

**5.** Procédé selon la revendication 4, **caractérisé en ce que** la force ($F_{max}$) est déterminée au début de l'augmentation du glissement de freinage ou du glissement d'entraînement et/ou de l'accélération des roues du premier cycle de régulation ABS ou ASR.

**6.** Procédé selon l'une des revendications 1 à 5, **caractérisé en ce que** la force $F_{min}$ est déterminée à l'apparition d'une accélération positive à partir du glissement de freinage ou d'une accélération négative à partir du glissement de propulsion des roues du premier cycle de régulation ABS ou ASR.

**7.** Procédé selon l'une des revendications 1 à 6, **caractérisé en ce que** le point de travail et/ou la plage de travail de la (des) grandeur(s) de régulation sont réglés à nouveau à chaque instabilité des roues, à l'aide du glissement de roue.

**8.** Procédé selon l'une des revendications 1 à 7, **caractérisé en ce qu'**à l'entrée dans le domaine de stabilité de la tenue de route, on régule le dimensionnement et/ou la modulation de la pression de freinage et/ou du moment d'entraînement suivant la relation

$$F = k_1 \times F_{max}$$

dans laquelle

$k_1$ = facteur de proportionnalité
F = force longitudinale réelle entre les pneus et la chaussée.

**9.** Procédé selon l'une des revendications 1 à 8, **caractérisé en ce que** pendant le freinage ABS ou la propulsion ASR, on surveille le produit ($k_1 \times F_{max}$) de la force maximale ($F_{max}$) et d'un facteur proportionnel ($k_1$), dans lequel entre un intervalle de temps ($t_{Impuls}$) depuis le début de la variation de la force due à la constitution et/ou la modulation de la pression de freinage et/ou du moment d'entraînement, jusqu'à sa fin, suivant la relation

$$F = k_1 \times F_{max}$$

dans laquelle $k_1$ = facteur de proportionnalité

F = force longitudinale réelle entre les pneus et la chaussée,

et, lorsque le produit $k_1$ x $F_{max}$ est supérieur à la force (F) mesurée au moyen des capteurs de la force sur la roue ou de capteurs de pneu, le cycle de régulation ABS ou ASR est terminé prématurément suivant la relation

$$T_{ABS/ASR} = \frac{T_0}{k_1 . F_{max} - F},$$

$T_0$ étant un temps nominal et $T_{ABS/ASR}$ étant le temps de sortie.

**10.** Procédé selon la revendication 9, **caractérisé en ce qu'**il est prévu comme valeur nominale $T_0$ un temps compris entre 60 et 90 ms, de préférence entre 70 et 80 ms.

**11.** Procédé selon l'une des revendications 1 à 10, **caractérisé en ce que** pendant le freinage ABS ou la propulsion ASR, on surveille le produit ($k_1 \times F_{max}$) de la force maximale ($F_{max}$) et d'un facteur de proportionnalité ($k_1$) dans lequel entre un intervalle de temps ($t_{Impuls}$) depuis le début de la variation de la force due à la constitution et/ou la modulation de la pression de freinage et/ou du moment d'entraînement, jusqu'à sa fin, suivant la relation

$$F = k_1 \times F_{max}$$

dans laquelle $k_1$ = facteur de proportionnalité

F = force longitudinale réelle entre les pneus et la chaussée,

et **en ce que**, lorsque le produit $k_1 \times F_{max}$ correspond approximativement à la force (F) relevée au moyen des capteurs de la force sur la roue ou de capteurs de pneu, on introduit dans une fenêtre de temps nominale une modulation de la pression de freinage par une impulsion de montée en pression et/ou l'addition d'un moment d'entraînement, dans le système de régulation, l'accélération négative des roues et la variation de la force (F) étant relevée, et une évaluation des grandeurs relevées étant effectuée **en ce que** le point de travail est à nouveau déterminé lorsque la force (F) augmente et l'accélération est pratiquement constante.

**12.** Procédé selon la revendication 11, **caractérisé en ce que** la force maximale ($F_{max}$) ou l'accélération est évaluée par comparaison avec une valeur de seuil et, en cas de dépassement de la valeur de seuil, par une augmentation de la pression de freinage et/ou l'addition d'un moment d'entraînement, une instabilité est déclenchée qui initialise un réglage du point de travail selon l'une des revendications 1 à 6 ou selon la revendication 7.

**13.** Procédé selon la revendication 11, **caractérisé en ce que** la force maximale ($F_{max}$) ou l'accélération est évaluée par comparaison avec une valeur de seuil, et en cas de dépassement de la valeur de seuil, par une augmentation de la pression de freinage par introduction d'au moins une impulsion de montée en pression, en règle générale par introduction de plusieurs impulsions de montée en pression et/ou au moins d'un moment d'entraînement additionnel dans le système de régulation, la force (F) relevée est approchée de la force maximale $F_{max}$ et un nouveau point de travail est réglé.

**14.** Procédé selon la revendication 11, **caractérisé en ce que** la fenêtre de temps nominale se situe entre 100 et 200 ms.

**15.** Procédé selon l'une des revendications 1 à 9, **caractérisé en ce que** pendant le freinage ABS ou la propulsion ASR, on surveille le produit ($k_1$ x $F_{max}$) de la force maximale ($F_{max}$) et d'un facteur proportionnel ($k_1$), dans lequel entre un intervalle de temps ($t_{Impuls}$) depuis le début de la variation de la force due à la constitution et/ou la modulation de la pression de freinage et/ou du moment d'entraînement, jusqu'à sa fin, suivant la relation

$$F = k_1 \times F_{max}$$

dans laquelle $k_1$ = facteur de proportionnalité

F = force longitudinale réelle entre les pneus et la chaussée,

et **en ce que**, lorsque le produit $k_1$ x $F_{max}$ est inférieur à la force (F) relevée au moyen des capteurs de la force sur la roue ou de capteurs de pneu, on introduit dans le système de régulation une variation de la force par la constitution et/ou la modulation de la pression de freinage et/ou le moment d'entraînement, jusqu'à ce que la force mesurée (F) soit inférieure/égale à $k_2 \times F_{min}$, avec $k_2 > 1$.

**16.** Procédé pour réduire la course de freinage d'un véhicule automobile à quatre roues et à au moins deux essieux, par mise en oeuvre du procédé selon l'une des revendications 1 à 15, **caractérisé par** une régulation fondée sur des signaux de capteurs de la force sur une roue ou de capteurs de pneu d'une première grandeur de régulation dont la valeur de consigne, fondée sur l'adhérence entre le pneu et la chaussée, est déterminée avec une deuxième grandeur de régulation.

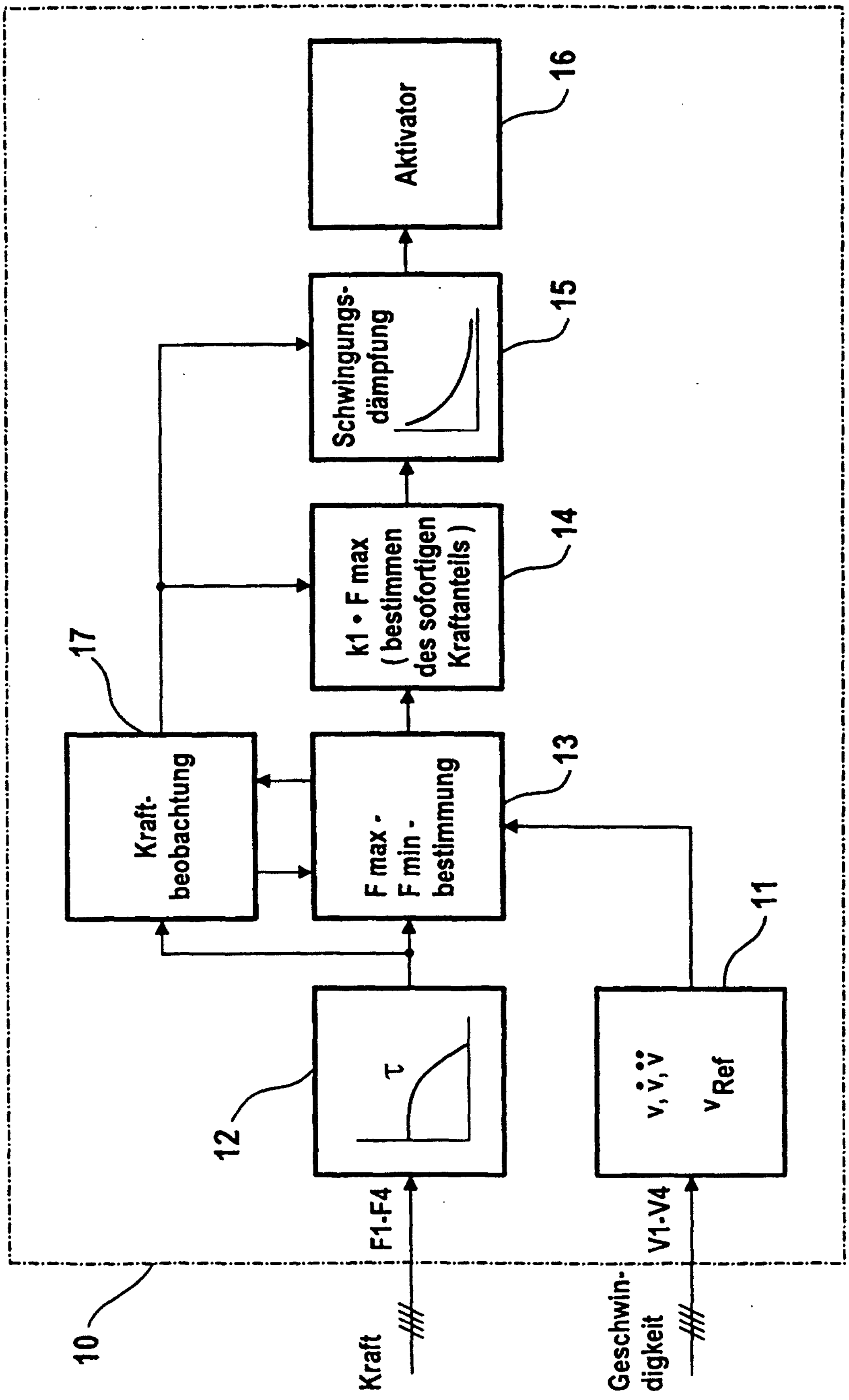

Aktivator
16
Schwingungs-
dämpfung
15
k1 • F max
( bestimmen
des sofortigen
Kraftanteils )
14
17
Kraft-
beobachtung
F max -
F min -
bestimmung
13
11
12
τ
v, v̇, v̈
v Ref
10
Kraft
F1-F4
Geschwin-
digkeit
V1-V4


Fig. 1

Fig. 2

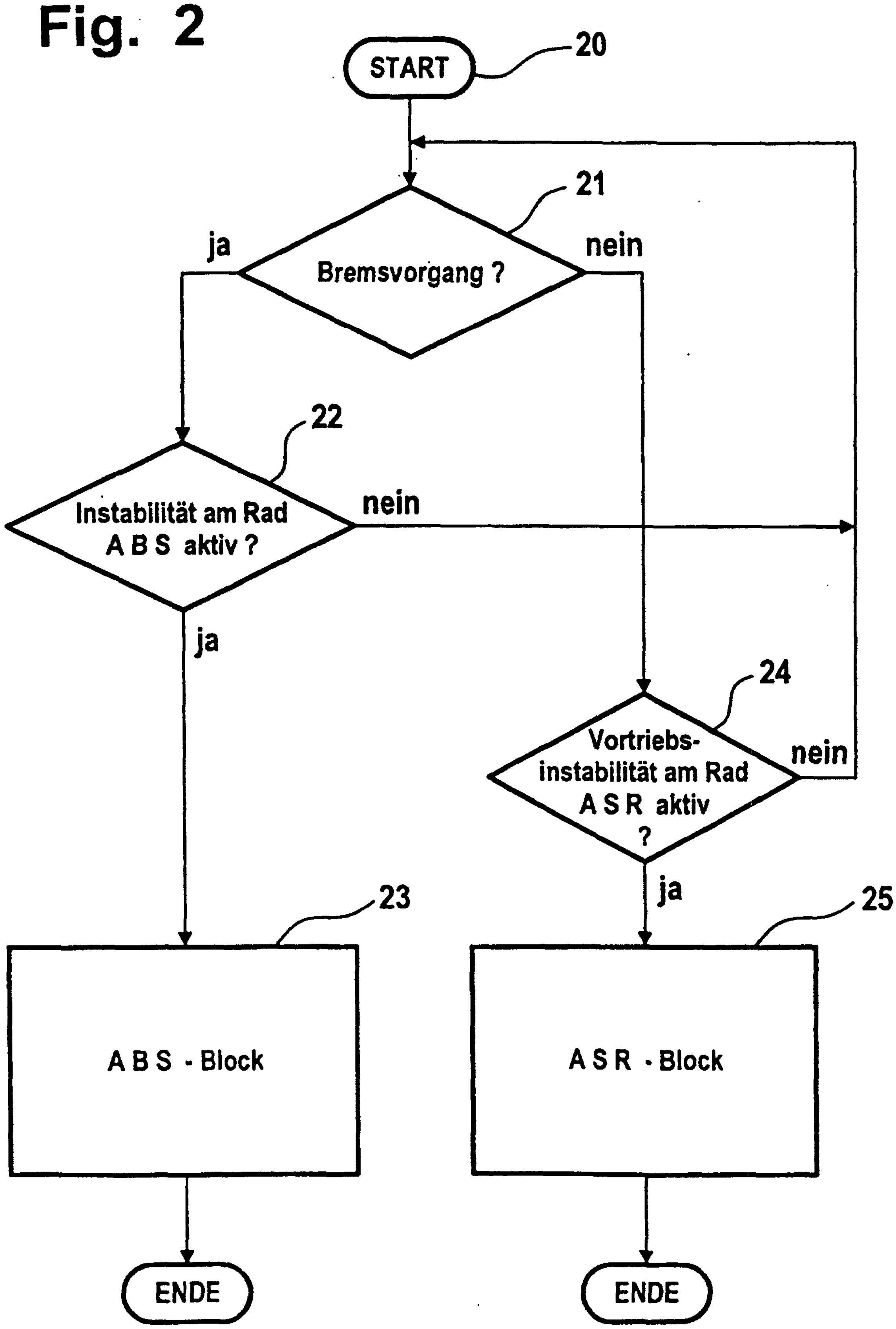
START
20
21
Bremsvorgang ?
ja
nein
22
Instabilität am Rad
A B S aktiv ?
nein
ja
24
Vortriebs-
instabilität am Rad
A S R aktiv
?
nein
ja
23
25
A B S - Block
A S R - Block
ENDE
ENDE

Fig. 3

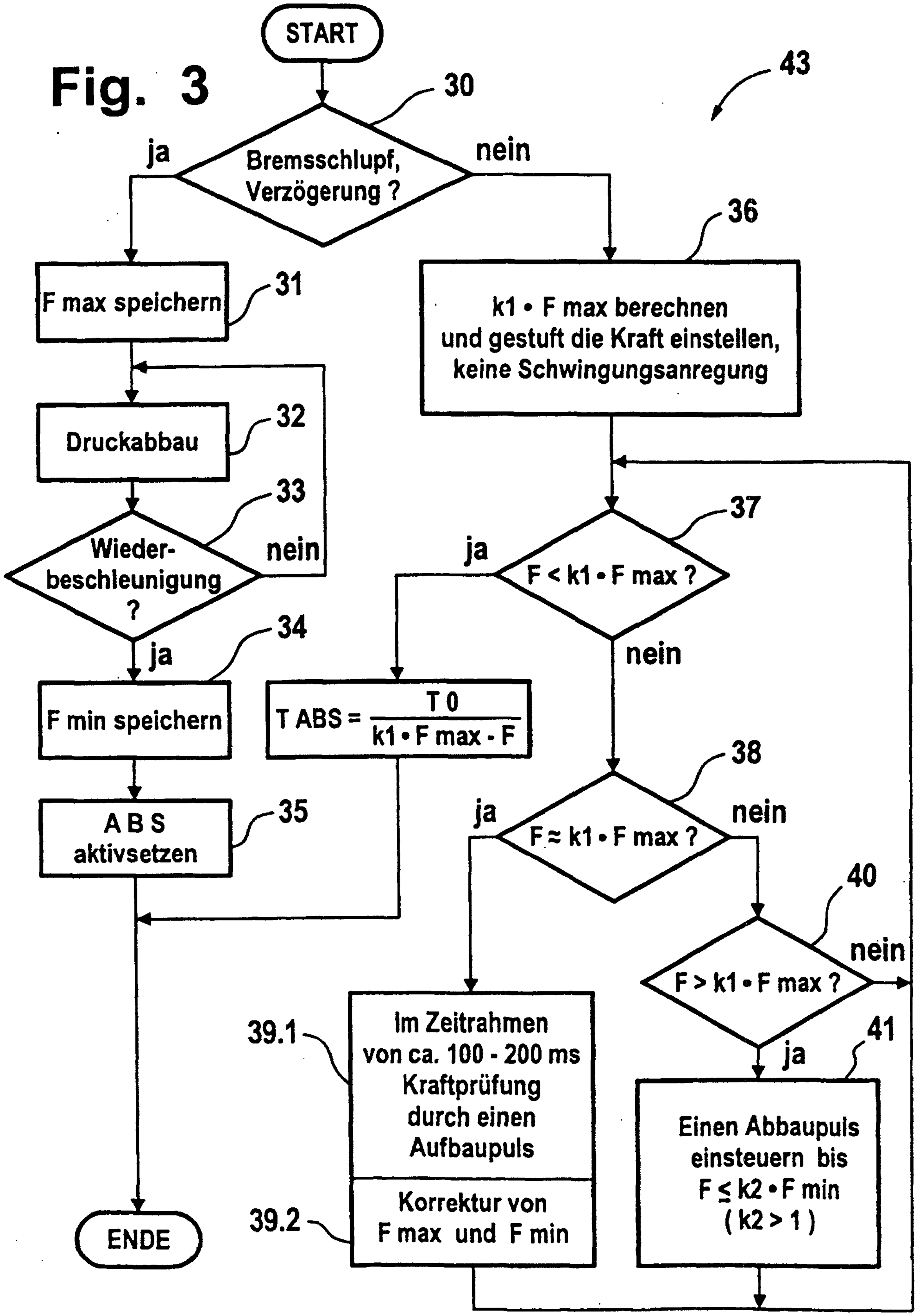
START
30
Bremsschlupf, Verzögerung ?
ja
nein
F max speichern
31
Druckabbau
32
Wieder-beschleunigung ?
33
nein
ja
F min speichern
34
A B S aktivsetzen
35
ENDE
43
36
k1 • F max berechnen und gestuft die Kraft einstellen, keine Schwingungsanregung
37
F < k1 • F max ?
ja
nein
T ABS = T 0 / k1 • F max - F
38
F ≈ k1 • F max ?
ja
nein
40
F > k1 • F max ?
nein
ja
39.1
Im Zeitrahmen von ca. 100 - 200 ms Kraftprüfung durch einen Aufbaupuls
39.2
Korrektur von F max und F min
41
Einen Abbaupuls einsteuern bis F ≤ k2 • F min ( k2 > 1 )

# Fig. 4

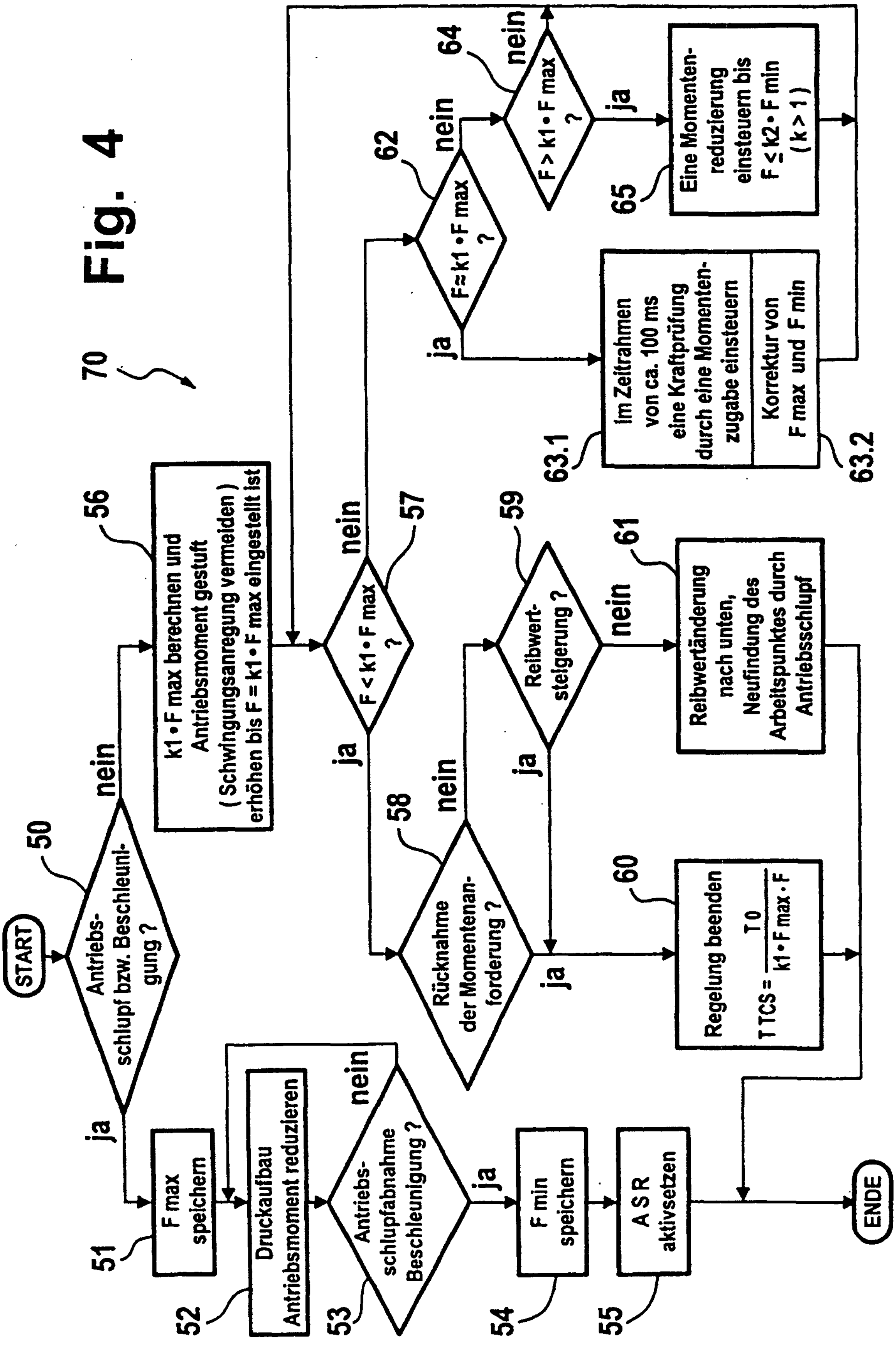
70
START
50
Antriebs-
schlupf bzw. Beschleuni-
gung ?
ja
nein
51
F max
speichern
52
Druckaufbau
Antriebsmoment reduzieren
53
Antriebs-
schlupfabnahme
Beschleunigung ?
nein
ja
54
F min
speichern
55
A S R
aktivsetzen
ENDE
56
k1 • F max berechnen und
Antriebsmoment gestuft
( Schwingungsanregung vermeiden )
erhöhen bis F = k1 • F max eingestellt ist
57
F < k1 • F max
?
ja
nein
58
Rücknahme
der Momentenan-
forderung ?
nein
ja
59
Reibwert-
steigerung ?
ja
nein
60
Regelung beenden
T TCS = T0 / k1 • F max • F
61
Reibwertänderung
nach unten,
Neufindung des
Arbeitspunktes durch
Antriebsschlupf
62
F≈k1 • F max
?
ja
nein
63.1
Im Zeitrahmen
von ca. 100 ms
eine Kraftprüfung
durch eine Momenten-
zugabe einsteuern
63.2
Korrektur von
F max und F min
64
F > k1 • F max
?
ja
nein
65
Eine Momenten-
reduzierung
einsteuern bis
F ≤ k2 • F min
( k > 1 )

Fig. 5

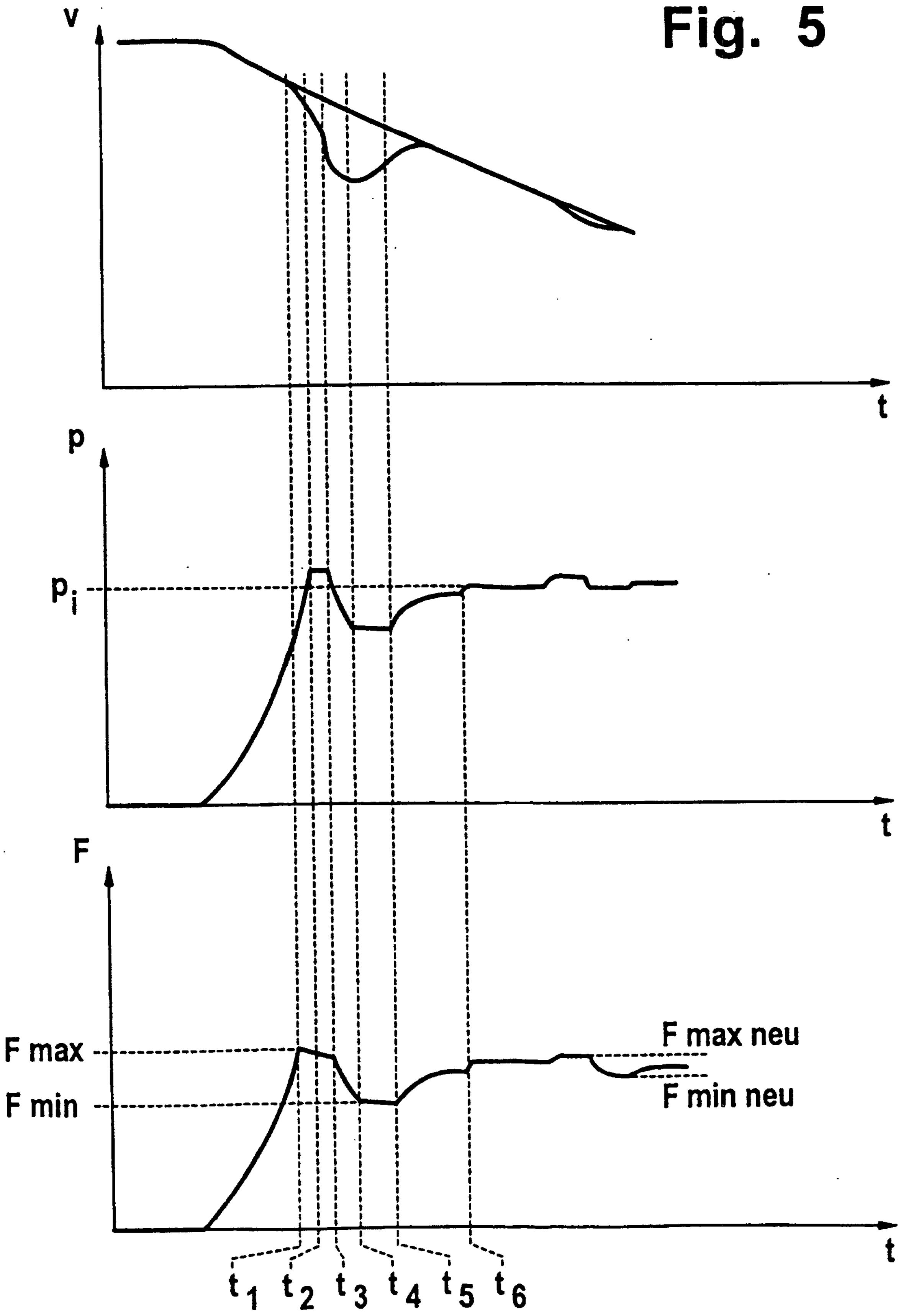

Fig. 6

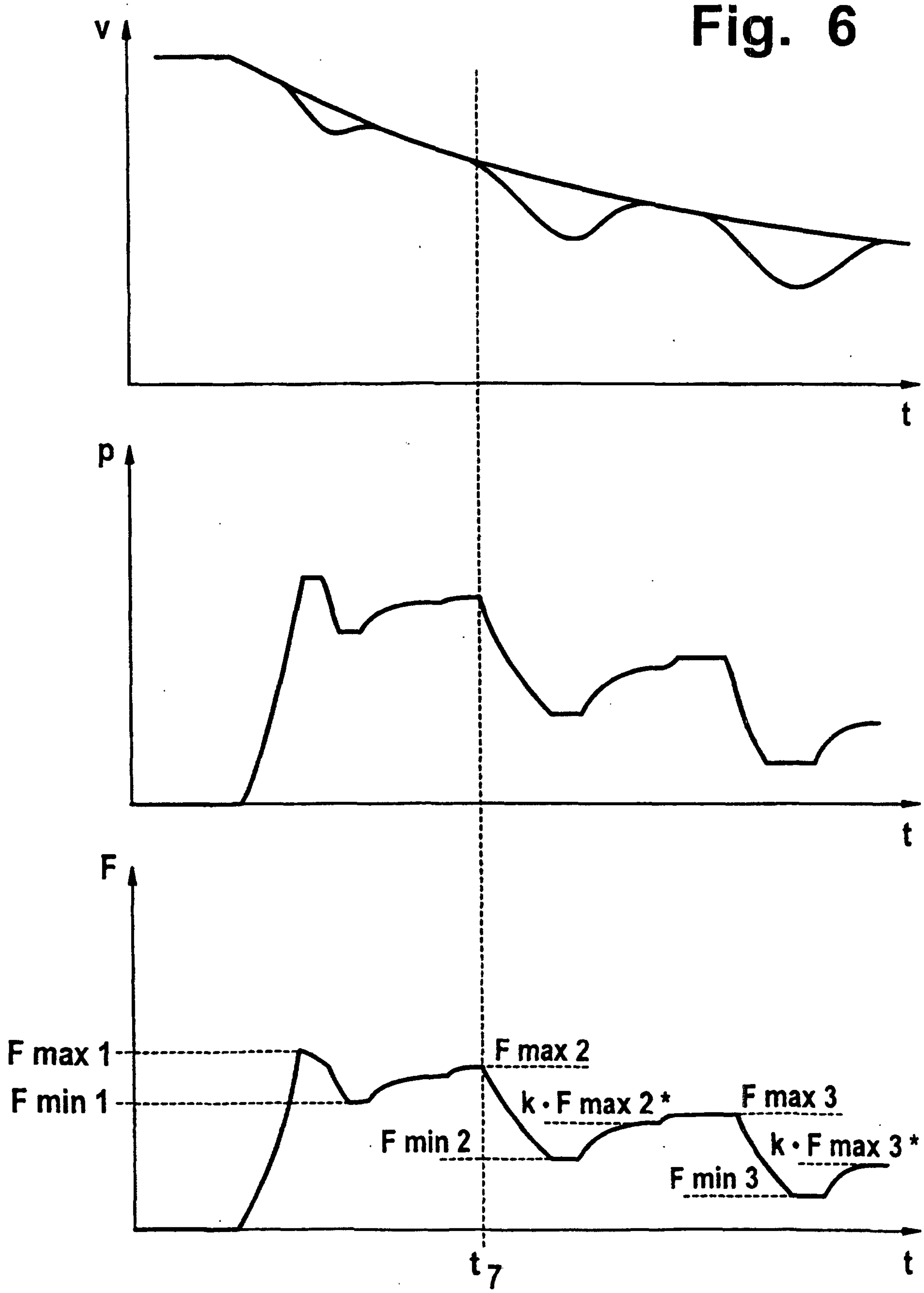
v
t
p
t
F
F max 1
F min 1
F max 2
k • F max 2 *
F min 2
F max 3
k • F max 3 *
F min 3
t7
t

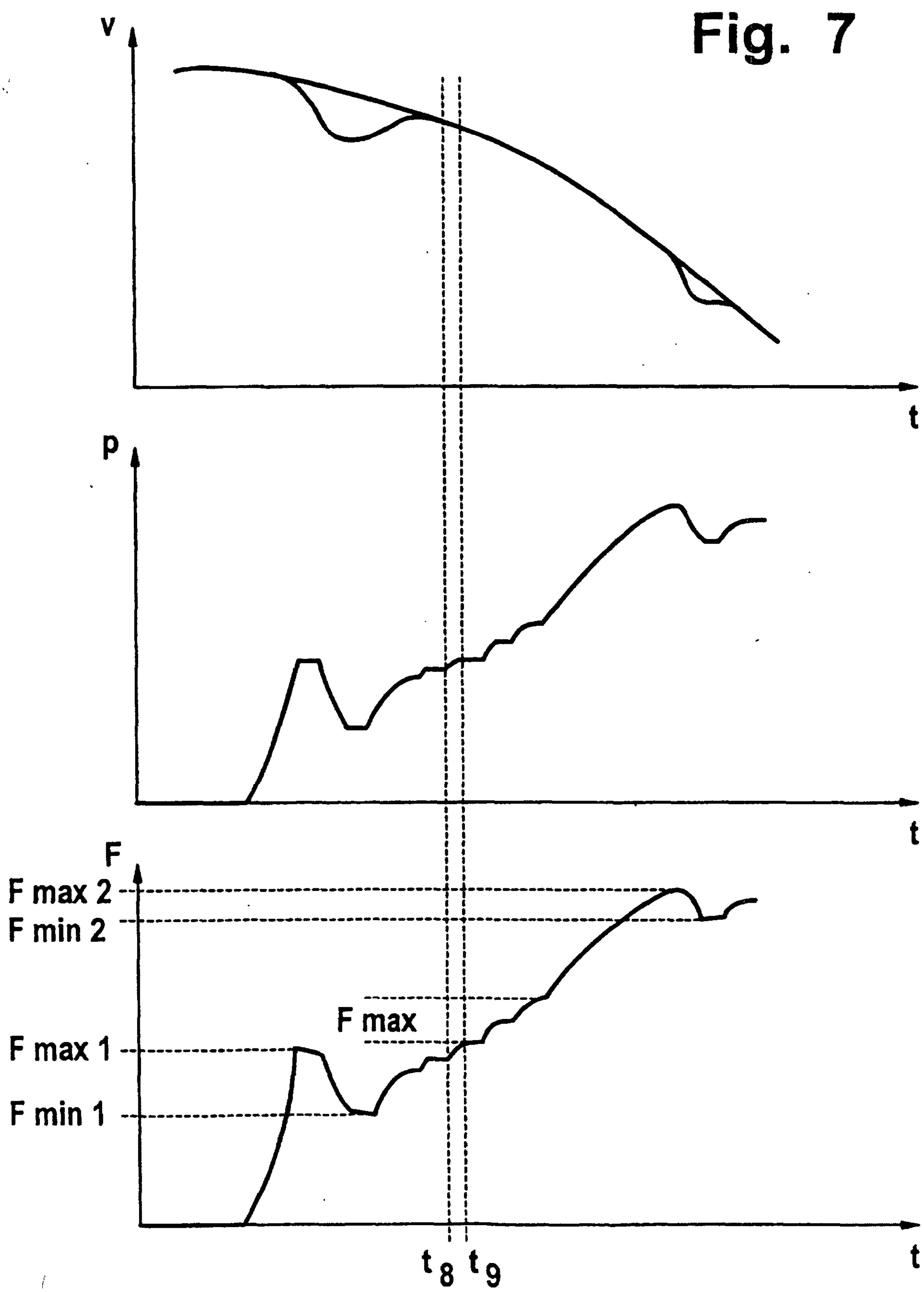
Fig. 7
v
t
p
t
F
F max 2
F min 2
F max
F max 1
F min 1
t8
t9
t